Europäisches Patentamt

(19) European Patent Office    (11) Publication number: **0 078 654**
Office européen des brevets                              **B1**

(12)                          **EUROPEAN PATENT SPECIFICATION**

(45) Date of publication of patent specification: **29.01.86**    (51) Int. Cl.⁴: **H 01 S 3/045,** H 01 S 3/07, H 01 S 3/093

(21) Application number: **82305685.8**

(22) Date of filing: **26.10.82**

(54) Multiple host face-pumped laser.

| | |
|---|---|
| (30) Priority: **02.11.81 US 317134** | (73) Proprietor: **GENERAL ELECTRIC COMPANY** **1 River Road** **Schenectady New York 12305 (US)** |
| (43) Date of publication of application: **11.05.83 Bulletin 83/19** | (72) Inventor: **Robbins, Alexander George** **3408 Stratford Drive** **Vestal New York 13850 (US)** |
| (45) Publication of the grant of the patent: **29.01.86 Bulletin 86/05** | |
| (84) Designated Contracting States: **DE FR GB** | (74) Representative: **Wood, Anthony Charles et al** **c/o MICHAEL BURNSIDE & PARTNERS** **2 Serjeants' Inn Fleet Street** **London EC4Y 1HL (GB)** |
| (56) References cited: **FR-A-2 293 086** **US-A-3 487 330** **US-A-3 631 362** **US-A-3 633 126** **US-A-3 766 493** **US-A-4 207 541** **US-A-4 232 276** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the Invention

#### *Field of the Invention*

This invention relates to a face-pumped laser, and more particularly, to such a laser providing in one head a plurality of laser hosts allowing a greater volume of host material and therefore higher average power laser output while maintaining the benefits of the face-pumped, total internal reflection laser technique.

#### *Description of the Prior Art*

It is well known in the art that laser devices emit electromagnetic radiation of wavelengths generally in the infrared and visible portions of the electromagnetic spectrum. The radiation emission is substantially coherent and is characterized by a narrow wavelength band.

Laser devices are operable using a suitable medium or host in which a population inversion may be established in a particular metastable energy level by proper optical "pumping". Neodymium glass, ruby, helium, neon, and carbon dioxide are media which are commonly employed. By "pumping" or irradiating the active medium with electromagnetic radiation possessing power necessary to create the population inversion, conditions permitting coherent emission may be obtained. The means emitting the radiation causing inversion is called "pumping means" while the wavelength of the radiation is known as the "pumping wavelength".

Laser devices which emit high energy pulses are well known in the art as pulsed lasers. The emitted pulses, though high in energy, are short in duration, lasting in the order of milliseconds to picoseconds.

The laser output is only a small percentage of the input energy, a large percentage of the energy ending up as heat in the laser medium. In pulsed lasers, one or more surfaces of the active medium are cooled in order to extract the excess heat. Because of the limited thermal conductivity of the host material, the excess heat is more rapidly removed from near the surface than from the interior, causing the center of the host to be warmer than the surface. Repeated operation of the laser host, precluding a proper cooling period, causes a substantial thermal gradient to be established, resulting in possible structural failure or distortion of the output beam. Lasers employing host materials characterized by low thermal conductivities are particularly limited to low pulse repetition rates.

Recent interest in high repetition rates of pulsed lasers has led to increased activity in this field. Since a number of materials, particularly those of the doped glass species, which are employed as the active laser host have low thermal conductivity, several approaches have been taken to overcome this restraint on pulse repetition rate. These approaches have in common the segmenting of the laser material and interspersing of a flowing coolant. The result of this procedure is that the unwanted heat is more quickly removed through the relatively smaller dimension of the segmented laser host material and therefore the composite arrangement can be operated at higher pulse repetition rates without structural failure due to thermally induced stress. In general, however, this technique has not proven to be entirely satisfactory, since the problems of nonuniform heating inversion across the device aperture remains, causing distortion of the laser output beam which in itself is undesirable and which may also result in structural damage.

Presently, face-pumped lasers are advantageously employed as pulsed lasers. A face-pumped laser permits substantially uniform activation and concomitant heating across the laser aperture in contrast to the non-uniform optical properties of the side-pumped, rod-type laser device.

A problem not solved by the prior art, however, is the provision, in one laser head, of greater volume of laser host material without exceeding thermal stress limitations and without thermally inducing bending of the laser host body.

US—A—3631362 discloses a multiple host face-pumped laser comprising:

at least two elongate homogeneous bodies of an active laser host, the laser host bodies each having a longitudinal axis and at least two optically plane faces extending substantially parallel to each other and to the longitudinal axis, the laser host bodies being arranged in a spaced apart relationship such that their respective optically plane faces and longitudinal axes are generally parallel thereby to allow a fluid coolant to pass between the laser host bodies;

means for cooling said optically plane faces of said laser host bodies; and

pumping means including a source of electromagnetic radiation disposed adjacent an outermost optically plane face of a said laser host body such that radiation from said source will impinge upon that optically plane face and enter that laser host body to excite atoms of that laser host body to a metastable state thereby producing population inversion therein; the laser host bodies being further arranged relative to one another such that at least a portion of the radiation impinging upon and traversing each laser host body will impinge upon an optically plane face of and enter the other laser host body.

The present invention is characterized in that:

said pumping means includes at least two said sources of electromagnetic radiation, each said source being disposed adjacent one of the two said outermost optically plane faces of said host bodies;

and that said cooling means includes a plurality of nozzles for directing said fluid coolant in greater quantities across said outermost optically plane faces than across inner optically plane faces of the laser host bodies, whereby the optically plane faces of the laser host bodies are cooled to approximately the same temperature and thermally induced bending of the laser host bodies is obviated.

There is known per se from US—A—3633126 a face-pumped laser with one host body, wherein the pumping means includes two sources of electromagnetic radiation, each source being disposed adjacent one of the two opposite optically plane faces of the host body.

It is further known per se from FR—A—2293086 to cool the opposite plane faces of a laser host body to approximately the same temperature, whereby thermally induced bending of the laser host body is obviated.

The present invention permits the provision of a face-pumped laser having a higher average power output but which retains nevertheless the benefits of the face-pumped total internal reflection laser technique, while at the same time without increasing significantly the overall size of the laser and without exceeding the thermal stress limit in and without thermally inducing bending of the laser host body.

An embodiment of the invention will now be described, by way of example, with reference to the accompanying drawings, in which:—

Fig. 1 shows an elevational view, in cross section, of a preferred embodiment of multiple host, face-pumped laser according to the present invention; and

Fig. 2 shows, in perspective, a partial, cut-away view of the laser of Fig. 1.

Referring to the drawings, there is shown a multiple host face-pumped laser 10 according to the present invention. A pair of elongate homogeneous bodies of an active laser host 20 and 30 are provided. Neodymium doped yttrium-aluminum-garnet, ND:YAG, has been chosen for this application. Each of the laser hosts 20 and 30 has a longitudinal axis 25 and 35 respectively, and at least two optically plane faces 21, 22, and 31, 32 respectively, extending substantially parallel to each other and to the longitudinal axis. Laser hosts 20 and 30 are arranged in a spaced-apart relationship as shown such that their respective optically plane faces and longitudinal axes are generally parallel.

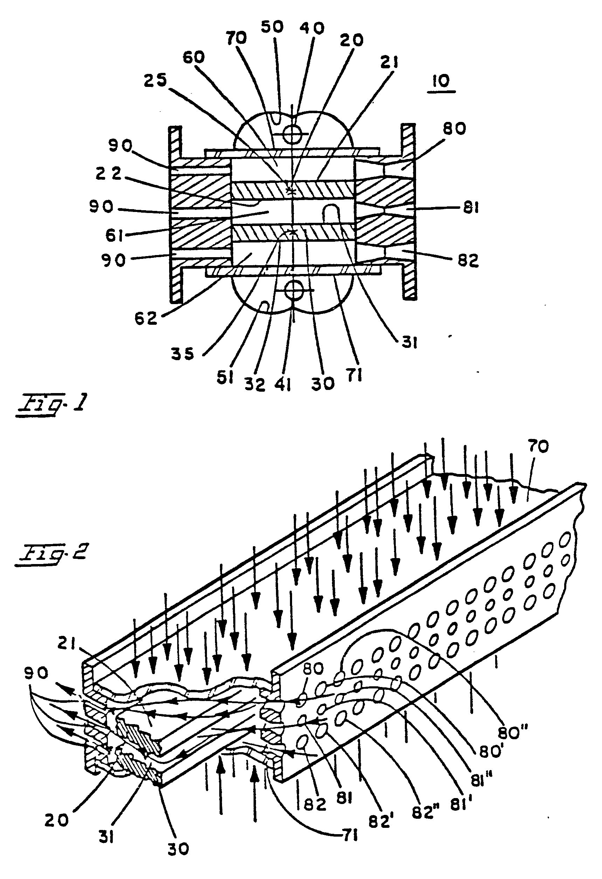

Pumping means include a pair of flash lamps 40 and 41 which serve to provide electromagnetic radiation (represented in Fig. 2 by arrows) to impinge upon one of the optically plane faces of at least one of the laser hosts 20 and 30. In the preferred embodiment, as shown, flash lamp 40 provides radiation to impinge upon optically plane face 21 of and to enter laser host 20 and makes use of a reflector 50 which serves to insure that a large portion of the radiation emitted by the lamp does reach the laser host 20. Likewise, flash lamp 41 and its associated reflector·51 provide radiation to impinge upon optically plane face 32 of and to enter laser host 30. Radiation from the flash lamps 40 and 41 entering the hosts 20 and 30 serves to excite atoms of the laser host bodies to a metastable state thereby producing a population inversion therein.

In a face-pumped laser host material such as the slabs 20 and 30, optical distortion effects occur as the slab undergoes heating during its operation. Means are therefore provided for passing a fluid coolant across the optically plane faces of the laser host bodies 20 and 30 for extracting heat generated within the host material, these including the cavities 60, 61, and 62. Fluid tight cavities 60 and 62 are formed in part by a pair of windows 70 and 71 which allow the radiation emitted from the flash lamps 40 and 41 to pass therethrough while serving to retain the fluid coolant being passed across the optically plane faces 21 and 32 respectively of the laser host 20 and 30. A series of nozzles 80, 80', 80", etc., 81, 81', 81", etc., and 82, 82', 82", etc., serve to receive and regulate the flow of coolant to be pumped into the cooling cavities 60, 61, and 62 respectively and to exit through parts 90 for effecting cooling of the optically plane faces of the hosts 20 and 30.

However, as can be seen, each of the laser hosts 20 and 30 is asymmetrically pumped. That is, the slab surfaces adjacent to the cooling channel 61 receive less optical pumping energy than the faces adjacent to channels 60 and 62. This is caused by absorption of the flash lamp radiation as it passes through the laser host to the surfaces adjacent to the cooling passage 61. The result is asymmetrical heating which tends to make the laser host slab bend. If this bending or flexing were to be allowed, the laser beam would be deflected through the total internal reflections of the face-pumped laser and the output beam would not be parallel to the input beam. Such misalignment would seriously degrade laser performance. Advantageously therefore, nozzles 81, 81', 81", etc. to coolant passage 61 are made smaller than the nozzles to channels 60 and 62 so that the fluid coolant velocity through channel 61 is decreased to the point that the optically plane faces of the laser hosts which are adjacent to channel 61 are maintained at essentially the same temperature as the optically plane faces which are adjacent to channels 60 and 62. By balancing asymmetrical heating with asymmetrical cooling, each laser host body has essentially the same top and bottom surface temperatures and hence does not bend and cause misalignment of the beam.

If desired, flash lamps 40 and 41 may also be cooled through the use of a suitable fluid coolant, as for example shown in U.S. 4,207,541, Karger et al., also assigned to same assignee as the present invention. In that arrangement, a flash lamp is placed within a concentric tubing which receives and allows to pass therethrough a liquid coolant which serves to take away excess heat from the flash lamp.

The description and figures herein apply specifically to a dual laser body; however, the invention will apply equally as well to three, four or more laser host bodies arrayed in similar fashion, with appropriate compensation in the coolant flow for each coolant channel.

The coolant chosen for use in the preferred embodiment is ethylene glycol and water, but other suitable coolants such as water, alcohol, fluorocarbons, gases, etc. may be used. Also, while ND:YAG has been selected as the preferred host material, and which is available from Airtron, Inc. of Morris Plains N.J., other suitable hosts, such as neodymium doped phosphate or silicate glasses, ruby and Alexandrite may be used.

## Claims

1. A multiple host face-pumped laser comprising:

at least two elongate homogeneous bodies of an active laser host (20, 30), the laser host bodies each having a longitudinal axis and at least two optically plane faces extending substantially parallel to each other and to the longitudinal axis, the laser host bodies being arranged in a spaced apart relationship such that their respective optically plane faces and longitudinal axes are generally parallel thereby to allow a fluid coolant to pass between the laser host bodies;

means for cooling said optically plane faces of said laser host bodies; and

pumping means including a source of electromagnetic radiation disposed adjacent an outermost optically plane face of a said laser host body such that radiation from said source will impinge upon that optically plane face and enter that laser host body to excite atoms of that laser host body to a metastable state thereby producing population inversion therein; the laser host bodies being further arranged relative to one another such that at least a portion of the radiation impinging upon and traversing each laser host body will impinge upon an optically plane face of and enter the other laser host body; characterized in that:

said pumping means includes at least two said sources (40, 41) of electromagnetic radiation, each said source being disposed adjacent one of the two said outermost optically plane faces of said host bodies;

and that said cooling means includes a plurality of nozzles (80, 81, 82) for directing said fluid coolant in greater quantities across said outermost optically plane faces (21, 32) than across inner optically plane faces (22, 31) of the laser host bodies, whereby the optically plane faces of the laser host bodies are cooled to approximately the same temperature and thermally induced bending of the laser host bodies is obviated.

2. A multiple host face-pumped laser according to claim 1, characterized in that said pumping means further includes a reflector (50, 51) associated with each said source (40, 41) for ensuring that most of the radiation from the respective sources is directed at and impinges upon the laser host body associated therewith and further for reflecting back to the laser host body associated therewith radiation which has traversed and left that laser host body.

## Revendications

1. Laser à pompage de face à hôtes multiples comportant:

— au moins deux corps homogènes, allongés en un matériau laser actif (20, 30), les corps en matériau laser ayant chacun un axe longitudinal et au moins deux faces optiquement planes s'étendant pratiquement parallèlement l'une à l'autre et à l'axe longitudinal, les corps en matériau laser étant disposés espacés l'un de l'autre de sorte que leurs faces optiquement planes respectives et leurs axes longitudinaux respectifs soient généralement parallèles pour ainsi permettre le passage d'un fluide de refroidissement entre les corps en matériau laser;

— des moyens pour refroidir les faces optiquement planes des corps en matériau laser;

— et des moyens de pompage comportant une source de rayonnement électromagnétique placée adjacente à la face optiquement plane la plus extérieure d'un corps en matériau laser de sorte que le rayonnement de cette source percutera cette face optiquement plane et pénétrera le corps en matériau laser pour exciter les atomes de ce corps en matériau laser jusqu'à un état métastable pour ainsi produire dans ce corps une inversion de population; les corps en matériau laser étant en outre disposés de sorte qu'au moins une partie du rayonnement frappant et traversant chaque corps en matériau laser en percutera une face optiquement plane et pénétrera dans l'autre corps en matériau laser; laser caractérisé en ce que:

— les moyens de pompage comporte au moins deux sources (40, 41) de rayonnement électromagnétique, chacune des sources étant placée adjacente à l'une des deux faces optiquement plane les plus extérieures des corps en matériau laser;

— et en ce que les moyens de refroidissement comprennent plusieurs injecteurs (80, 81, 82) pour envoyer de plus grandes quantités de fluide de refroidissement sur les faces optiquement planes les plus extérieures (21, 32) que sur les faces optiquement planes les plus intérieures (22, 31) des corps en matériau laser, grâce à quoi les faces optiquement planes des corps en matériau laser sont refroidies approximativement à la même température et la flexion induite thermiquement des corps en matériau laser est évitée.

2. Laser à pompe de face à hôtes multiples selon la revendication 1, caractérisé en ce que les moyens de pompage comportent en outre un réflecteur (50, 51) associé avec chacune des sources (40, 41) pour s'assurer que la plus grande partie du rayonnement provenant des sources respectives est dirigée vers et frappe le corps en matériau laser qui lui est associé et en outre pour réfléchir vers le corps en matériau laser associé, le rayonnement qui a traversé et quitté ce corps en matériau laser.

## Patentansprüche

1. Flächengepumpter Vielmedien-Laser enthaltend:

— wenigstens zwei langgestrecke homogene Körper aus einem aktiven Lasermedium (20, 30), wobei die Lasermediumkörper jeweils eine Längsachse und wenigstens zwei optisch ebene Flächen, die im wesentlichen parallel zueinander und zur Längsachse verlaufen, aufweisen und im Abstand derart angeordnet sind, daß ihre entsprechenden optisch ebenen Flächen und Längsachsen im allgemeinen parallel sind, damit ein Kühlmittel zwischen den Lasermediumkörpern hindurchströmen kann,

— eine Einrichtung zum Kühlen der optisch ebenen Flächen der Lasermediumkörper und

— eine Pumpeinrichtung mit einer Quelle elektromagnetischer Strahlung, die neben einer äußersten optisch ebenen Fläche eines Lasermediumkörpers angeordnet ist derart, daß Strahlung von der Quelle auf die optisch ebene Fläche aufprallt und in den Lasermediumkörper eintritt, um Atome dieses Lasermediumkörpers in einen metastabilen Zustand zu erregen, wodurch eine Populationsumkehr darin erzeugt wird, wobei die Lasermediumkörper ferner derart relativ zueinander angeordnet sind, daß wenigstens ein Teil der Strahlung, die auf jeden Lasermediumkörper prallt und durch diesen hindurchtritt, auf eine optisch ebene Fläche des anderen Lasermediumkörpers prallt und in diese eintritt, dadurch gekennzeichnet, daß:

— die Pumpeinrichtung wenigstens zwei Quellen (40, 41) elektromagnetischer Strahlung aufweist, wobei jeweils eine Quelle neben einer der zwei äußersten optisch ebenen Flächen der Lasermediumkörper angeordnet ist, und

— die Kühleinrichtung mehrere Düsen (80, 81, 82) aufweist zum Richten des kühlmittels in größeren Mengen über die äußersten optisch ebenen Flächen (21, 32) als über die inneren optisch ebenen Flächen (22, 31) der Lasermediumkörper, wodurch die optisch ebenen Flächen der Lasermediumkörper auf etwa die gleiche Temperatur gekühlt werden und eine thermisch induzierte Biegung der Lasermediumkörper verhindert wird.

2. Flächengepumpter Vielmedien-Laser nach Anspruch 1, dadurch gekennzeichnet, daß die Pumpeinrichtung ferner einen Reflektor (50, 51) aufweist, der jeder Quelle (40, 41) zugeordnet ist, um sicherzustellen, daß der größte Teil der Strahlung von den entsprechenden Quellen auf den zugeordneten Lasermediumkörper gerichtet ist und auf diesen aufprallt, und um ferner Strahlung, die den Lasermediumkörper durchquert und verlassen hat, auf den zugeordneten Lasermediumkörper zurück zu reflektieren.

0 078 654

_Fig. 1_

_Fig. 2_

1